# EUROPÄISCHE PATENTSCHRIFT

(11) **EP 2 658 738 B1**
(45) Veröffentlichungstag und Bekanntmachung des Hinweises auf die Patenterteilung: **02.09.2015**
(21) Anmeldenummer: 11788408.0
(22) Anmeldetag: 15.11.2011
(51) Int. Cl.: B60L 11/12, H02J 7/06, B60L 15/00, H02P 27/14

(54) **SYSTEM ZUR ANKOPPLUNG MINDESTENS EINER GLEICHSTROMQUELLE AN EINEN STEUERBAREN ENERGIESPEICHER UND ZUGEHÖRIGES BETRIEBSVERFAHREN**
SYSTEM FOR COUPLING AT LEAST ONE DC SOURCE TO A CONTROLLABLE ENERGY STORE AND ASSOCIATED OPERATING METHOD
SYSTÈME POUR CONNECTER AU MOINS UNE SOURCE DE COURANT CONTINU À UN ACCUMULATEUR D'ÉNERGIE COMMANDABLE ET PROCÉDÉ DE FONCTIONNEMENT ASSOCIÉ

(30) Priorität: 29.12.2010 DE 102010064317
(43) Veröffentlichungstag der Anmeldung: 06.11.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwäbisch Gmünd (DE)
(86) Internationale Anmeldenummer: PCT/EP2011/070112
(87) Internationale Veröffentlichungsnummer: WO 2012/089398

(56) Entgegenhaltungen:
- EP-A1- 0 907 238
- JP-A- 2009 072 040

## Beschreibung

Die Erfindung betrifft ein System zur Ankopplung mindestens einer Gleichstromquelle an einen steuerbaren Energiespeicher sowie ein Verfahren zum Betrieb des erfindungsgemäßen Systems.

### Stand der Technik

Es zeichnet sich ab, dass in Zukunft sowohl bei stationären Anwendungen, wie z.B. Windkraftantagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

Sollen Batterien z.B. in Elektrofahrzeugen eingesetzt werden, ist zu beachten, dass heute verfügbare Batterietechnologien die Reichweite der Elektrofahrzeuge erheblich limitieren.

Die Druckschrift JP 2009-072040 A offenbart eine Schaltung zur Übertragung elektrischer Energie von einem während eines Bremsvorgangs als Generator arbeitenden Motors über einen Wechselrichter und einen Tiefsetzsteller an eine Batterie. Die Druckschrift EP 0 907 238 A1 offenbart eine Stromumwandlungsvorrichtung für den drehzahlgeregelten Antrieb eines Dreiphasen-Wechselstrom-Motors.

### Offenbarung der Erfindung

Die vorliegende Erfindung schafft ein System zur Ankopplung mindestens einer Gleichstromquelle an einen steuerbaren Energiespeicher, welcher der Steuerung und der elektrischen Energieversorgung einer n-phasigen elektrischen Maschine, mit n ≥ 1, dient. Der steuerbare Energiespeicher weist dabei n parallele Energieversorgungszweige auf, welche einerseits mit einer Bezugsschiene und andererseits mit jeweils einer Phase der elektrischen Maschine verbunden sind. Zur Einspeisung von elektrischer Energie ist ein Zwischenkreis vorgesehen, welcher ausgangsseitig über eine steuerbare Koppelschaltung mit den Energieversorgungszweigen des steuerbaren Energiespeichers und eingangsseitig mit mindestens einer Gleichstromquelle unmittelbar oder mittelbar verbunden ist.

Die vorliegende Erfindung schafft außerdem ein Verfahren zum Betrieb eines erfindungsgemäßen Systems, wobei ein Stromfluss aus der mindestens einen Gleichstromquelle in die Energieversorgungszweige des steuerbaren Energiespeichers oder die Phasen der elektrischen Maschine mit Hilfe der steuerbaren Koppelschaltung gesteuert wird.

### Vorteile der Erfindung

Durch die erfindungsgemäße Ankopplung einer zusätzlichen Gleichstromquelle an den steuerbaren Energiespeicher ist es möglich, zusätzliche elektrische Energie zur Verfügung zu stellen und auf diese Weise zum Beispiel die Reichweite eines Elektrofahrzeugs erheblich zu verlängern. Die zur Verfügung gestellte Energie kann dabei je nach aktuellem Betriebszustand des steuerbaren Energiespeichers und der elektrischen Maschine entweder zum Laden von Energiespeicherzellen der steuerbaren Energiequelle oder zur Unterstützung der steuerbaren Energiequelle bei der Energieversorgung der elektrischen Maschine genutzt werden. Das erfindungsgemäße System zeichnet sich dabei insbesondere durch eine einfach realisierbare und damit kostengünstige Schaltungstopologie aus.

Gemäß einer Ausführungsform der Erfindung ist der Zwischenkreis mit der Bezugsschiene verbunden und die steuerbare Koppelschaltung umfasst für jeden Energieversorgungszweig jeweils einen stromgeregelten Gleichspannungswandler, insbesondere Tiefsetzsteller. Dabei kann über die Tastverhältnisse der einzelnen Gleichspannungswandler gleichzeitig und voneinander unabhängig Strom in die Phasen der elektrischen Maschine oder in die Energieversorgungszweige des steuerbaren Energiespeichers eingespeist werden. Dabei kann sowohl Gleichstrom als auch ein überlagerter Wechselstrom durch entsprechende Modulation des Tastverhältnisses realisiert werden. Die Regelung des steuerbaren Energiespeichers stellt dabei zu jedem Zeitpunkt die korrekten Phasenspannungen sicher. In Abhängigkeit von aktuellen Momentanwerten der Phasenströme der elektrischen Maschine fließt damit Strom aus dem Gleichspannungswandler zur Unterstützung des steuerbaren Energiespeichers in die elektrische Maschine oder zum Laden von Energiespeicherzellen in den steuerbaren Energiespeicher. Damit bleibt die elektrische Maschine vom Grad einer momentanen Stromeinspeisung über den Zwischenkreis unbeeinflusst.

Alternativ zu einer Ausgestaltung als Gleichspannungswandler kann die steuerbare Koppelschaltung auch einen n-phasigen Wechselrichter umfassen, wobei jeweils ein Wechselrichterzweig über jeweils mindestens eine zusätzliche Induktivität mit jeweils einem Energieversorgungszweig des steuerbaren Energiespeichers verbunden ist. Auch diese Art der Ankopplung der Gleichstromquelle ermöglicht einer gleichzeitigen und voneinander unabhängigen Stromeinspeisung in die Phasen der elektrischen Maschine oder in die Energieversorgungszweige des steuerbaren Energiespeichers. Dabei erfolgt eine Raumzeigermodulation des Wechselrichters in Abhängigkeit der Raumzeigermodulation des steuerbaren Energiespeichers und der aus der Gleichstromquelle einzuspeisenden Leistung. Dadurch entfällt bei dieser Ausführungsform die Notwendigkeit einer elektrischen Verbindung des Zwischenkreises mit der Bezugsschiene.

Umfasst die steuerbare Koppelschaltung einen n-phasigen Wechselrichter, so können die Wechselrichterzweige auch unmittelbar, das heißt ohne Zwischenschaltung einer zusätzlichen Induktivität mit jeweils einem Energieversorgungszweig des steuerbaren Energiespeichers verbunden werden. In diesem Fall muss aber zwischen den Zwischenkreis und die mindestens eine Gleichstromquelle mindestens eine zusätzliche Induktivität geschaltet sein. Diese Induktivität ersetzt damit sozusagen die Induktivitäten in den Verbindungsleitungen zwischen der Koppelschaltung und dem steuerbaren Energiespeicher.

Eine besonders effiziente Energieeinspeisung bei hoher Verfügbarkeit lässt sich erreichen, wenn die Gleichstromquelle einen Reichweitenverlängerer (range extender) mit einem durch einen Verbrennungsmotor angetrieben Generator umfasst. Der Generator kann dabei als Gleichstromgenerator oder als Wechselstromgenerator mit nachgeschaltetem Gleichrichter ausgeführt sein.

Alternativ oder zusätzlich können aber auch beliebige andere Gleichstromquellen, wie z.B. Brennstoffzellen, Photovoltaikmodule oder auch Windkraftanlagen, eingesetzt werden. Grundsätzlich können beliebig viele Gleichstromquellen in beliebigen Ausführungsformen vorgesehen sein.

Eine weitere Ausführungsform der Erfindung sieht vor, dass die Energieversorgungszweige des steuerbaren Energiespeichers jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen, welche in Abhängigkeit von Steuersignalen die jeweils zugeordneten Energiespeicherzellen überbrückt oder die jeweils zugeordneten Energiespeicherzellen in den jeweiligen Energieversorgungszweig schaltet. Durch eine derartige Ausgestaltung lässt sich die Doppelfunktion des steuerbaren Energiespeichers, nämlich Steuerung und Energieversorgung der elektrischen Maschine auf besonders einfache und effiziente Art realisieren.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer ersten Ausführungsform eines erfindungsgemäßen Systems zur Ankopplung mindestens einer Gleichstromquelle an einen steuerbaren Energiespeicher,
- Fig. 2: eine schematische Darstellung einer zweiten Ausführungsform eines erfindungsgemäßen Systems zur Ankopplung mindestens einer Gleichstromquelle an einen steuerbaren Energiespeicher und
- Fig. 3: eine schematische Darstellung einer dritten Ausführungsform eines erfindungsgemäßen Systems zur Ankopplung mindestens einer Gleichstromquelle an einen steuerbaren Energiespeicher.

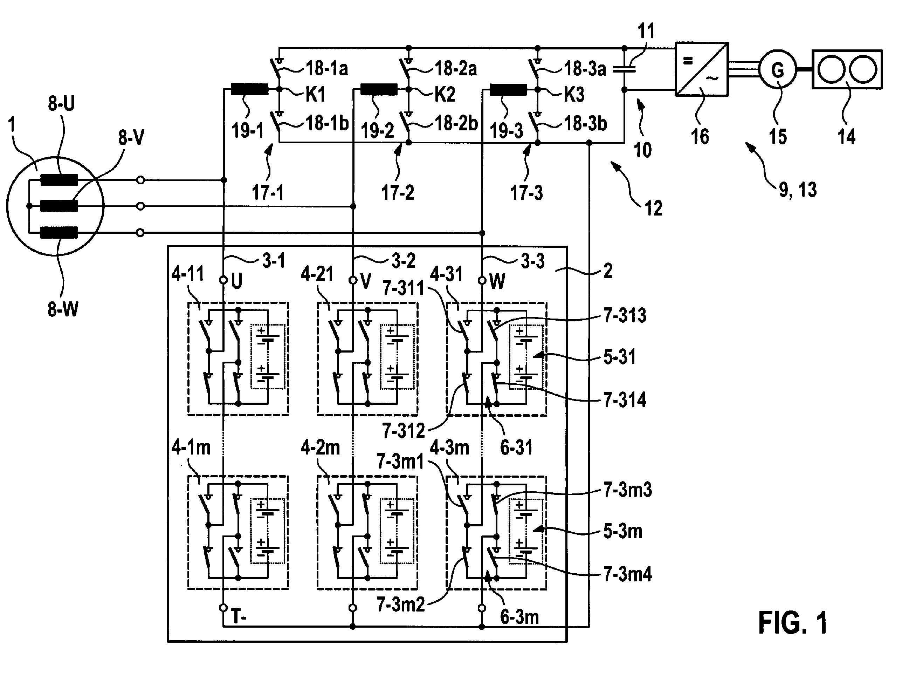

Die Figuren 1 bis 3 zeigen schematische Darstellungen von Ausführungsformen eines erfindungsgemäßen Systems zur Ankopplung mindestens einer Gleichstromquelle an einen steuerbaren Energiespeicher. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in den dargestellten Ausführungsformen ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1 m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In den dargestellten Ausführungsvarianten werden die Koppeleinheiten 6 jeweils durch vier steuerbare Schaltelemente 7-311, 7-312, 7-313 und 7-314 bis 7-3m1, 7-3m2, 7-3m3 und 7-3m4 gebildet, welche in Form einer Vollbrücke verschaltet sind. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen aller Schaltelemente 7 einer Koppeleinheit 6 zu unterbrechen. Alternativ können die Energiespeicherzellen 5 durch Schließen von jeweils zwei der Schaltelemente 7 einer Koppeleinheit 6 entweder überbrückt werden, z.B. Schließen der Schalter 7-312 und 7-314 oder in den jeweiligen Energieversorgungszweig 3 geschaltet werden, z.B. Schließen der Schalter 7-312 und 7-313.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist in den dargestellten Ausführungsbeispielen als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

In den dargestellten Ausführungsbeispielen weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

In den dargestellten Ausführungsbeispielen werden die Koppeleinheiten 6 jeweils durch vier steuerbare Schaltelemente 7 in Form einer Vollbrücke gebildet, was auch die Möglichkeit einer Spannungsumkehr am Ausgang des Energiespeichermoduls bietet.. Die Koppeleinheiten 6 können aber auch durch mehr oder weniger steuerbare Schaltelemente realisiert sein, solange die notwendigen Funktionen (Überbrücken der Energieversorgungszellen und Schalten der Energieversorgungszellen in den Energieversorgungszweig) realisierbar sind. Insbesondere können die Koppeleinheiten auch in Form von Hallbrücken ausgebildet sein. Derartige Ausführungsformen ergeben sich beispielhaft aus den älteren Anmeldungen DE 10 2010 027857 und DE 10 2010 027861.

An den steuerbaren Energiespeicher 2 ist eine Gleichstromquelle 9 angekoppelt. Dazu ist ein Zwischenkreis (Gleichspannungs-Zwischenkreis) 10 in Form eines Zwischenkreiskondensators 11 vorgesehen , welcher ausgangsseitig über eine steuerbare Koppelschaltung 12 mit den Energieversorgungszweigen 3 des steuerbaren Energiespeichers 2 und eingangsseitig mit der Gleichstromquelle 9 verbunden ist. Die Gleichstromquelle 9 umfasst dabei jeweils einen an sich bekannten Reichweitenverlängerer 13 mit einem durch einen Verbrennungsmotor 14 angetrieben Wechselstromgenerator 15, welchem ein Gleichrichter 16 nachgeschaltet ist. Alternativ zu einem Wechselstromgenerator 15 mit nachgeschaltetem Gleichrichter 16 kann auch ein Gleichstromgenerator vorgesehen sein. Alternativ oder zusätzlich zu dem Reichweitenverlängerer 13 können auch beliebige andere Gleichstromquellen, wie z.B. Brennstoffzellen und/oder Photovoltaikmodule, mit dem Zwischenkreis 10 verbunden werden.

Gemäß einer in Figur 1 dargestellten Ausführungsform ist der Zwischenkreis 10 mit der Bezugsschiene T- verbunden und die steuerbare Koppelschaltung 12 umfasst für jeden der Energieversorgungszweige 3-1, 3-2 und 3-3 jeweils einen stromgeregelten Gleichspannungswandler 17-1 bzw. 17-2 bzw. 17-3, welche in der dargestellten Ausführungsform als Tiefsetzsteller ausgeführt sind. Die Gleichspannungswandler 17 umfassen dabei jeweils eine Reihenschaltung von zwei steuerbaren Schaltelementen 18-1a und 18-1b bzw. 18-2a und 18.2b bzw. 18-3a und 18-3b. An eine Kontaktstelle K1 bzw. K2 bzw. K3, welche jeweils zwischen den beiden Schaltelementen angeordnet ist, ist jeweils eine Induktivität 19-1 bzw. 19-2 bzw. 19-3 angeschlossen, über welche die Gleichspannungswandler 17-1, 17-2 und 17-3 mit den Energieversorgungszweigen 3-1 bzw. 3-2 bzw. 3-3 des steuerbaren Energiespeichers und mit den Phasen U bzw. V bzw. W der elektrischen Maschine 1 verbunden sind.

Die Schaltelemente 18 der Gleichspannungswandler 17 werden durch eine nicht dargestellte Steuereinheit gesteuert, welche vorzugsweise auch die Schaltelemente 7 der Koppeleinheiten 6 steuert. Über die Tastverhältnisse der Steuersignale für die Schaltelemente 18 der einzelnen Gleichspannungswandler 17-1, 17-2 und 17-3 wird gleichzeitig und voneinander unabhängig Strom in die Phasen U bzw. V bzw. W der elektrischen Maschine 1 oder in die Energieversorgungszweige 3-1 bzw. 3-2 bzw. 3-3 des steuerbaren Energiespeichers 2 eingespeist. Durch entsprechende Modulation des Tastverhältnisses kann sowohl Gleichstrom als auch ein überlagerter Wechselstrom eingespeist werden. Die Regelung des steuerbaren Energiespeichers 2 stellt dabei zu jedem Zeitpunkt korrekte Spannungen an den Phasen U, V, W der elektrischen Maschine sicher. In Abhängigkeit von aktuellen Momentanwerten der Phasenströme der elektrischen Maschine 1 fließt Strom entweder aus dem Gleichspannungswandler 17 zur Unterstützung des steuerbaren Energiespeichers 2 in die elektrische Maschine 1 oder zum Laden von Energiespeicherzellen 5 in den steuerbaren Energiespeicher 2. Damit bleibt die elektrische Maschine 1 vom Grad einer momentanen Stromeinspeisung über den Zwischenkreis 10 unbeeinflusst.

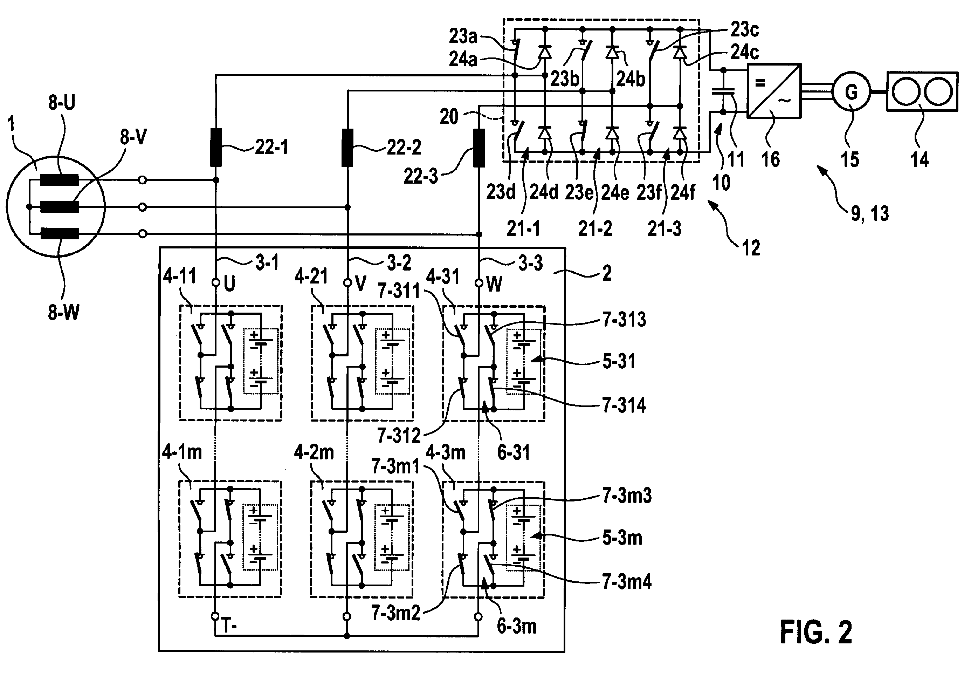

Gemäß einer zweiten Ausführungsform der Erfindung, welche in Figur 2 dargestellt ist, umfasst die steuerbare Koppelschaltung 12 einen 3-phasigen Wechselrichter 20 , wobei jeweils ein Wechselrichterzweig 21-1, 21-2, 21-3 über jeweils mindestens eine zusätzliche Induktivität 22-1 bzw. 22-2 bzw. 22-3 mit jeweils einem Energieversorgungszweig 3-1 bzw. 3-2 bzw. 3-3 des steuerbaren Energiespeichers 2 und mit jeweils einer Phase U bzw. V bzw. W der elektrischen Maschine 1 verbunden ist.

Der Wechselrichter 20 umfasst dabei steuerbare Schaltelemente 23a-23f in Form von Leistungsschaltern, welche mit den einzelnen Induktivitäten 22-1, 22-2, 22-3 verbunden sind und diese entweder gegen ein hohes Spannungspotential oder ein niedriges Spannungspotential schalten. Die Schaltelemente 23a-23f können beispielsweise als Insulated Gate Bipolar Transistor (IGBT) oder als Metal Oxide Semiconductor Field-Effect Transistor (MOSFET) ausgeführt sein. Der Wechselrichter 20 umfasst ferner mehrere Freilaufdioden 24a-24f, welche jeweils parallel zu einem der Schaltelemente 23a-23f angeordnet sind.

Auch durch eine derartige Ankopplung der Gleichstromquelle ist es möglich, gleichzeitig und voneinander unabhängig Strom in die Phasen U, V, W der elektrischen Maschine 1 oder in die Energieversorgungszweige 3-1, 3-2, 3-3 des steuerbaren Energiespeichers 2 einzuspeisen. Die Schaltelemente 21 des Wechselrichters 20 werden dabei wiederum durch eine nicht dargestellte Steuereinheit gesteuert, welche vorzugsweise auch die Schaltelemente 7 der Koppeleinheiten 6 steuert. Die Steuerung der Schaltelemente 21 und damit eine Raumzeigermodulation des Wechselrichters 30 erfolgt dabei in Abhängigkeit von der Raumzeigermodulation des steuerbaren Energiespeichers 2 sowie der jeweils aus der Gleichstromquelle 9 einzuspeisenden elektrischen Leistung.

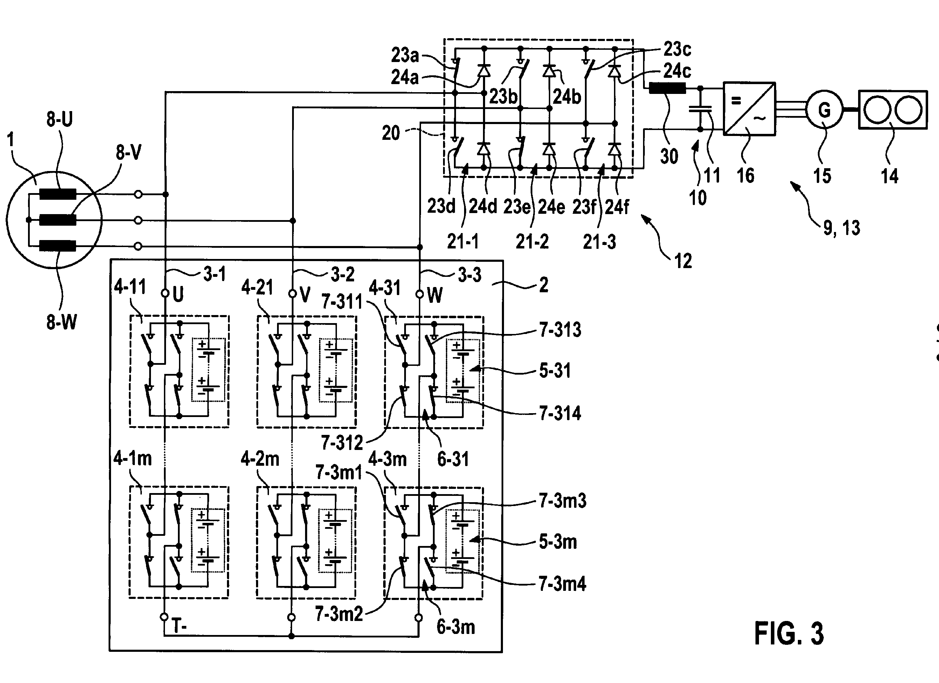

Eine in Figur 3 dargestellte dritte Ausführungsform der Erfindung unterscheidet sich von der zweiten Ausführungsform gemäß Figur 2 lediglich dadurch, dass die Energieversorgungszweige 3-1, 3-2 und 3-3 des steuerbaren Energiespeichers 2 und die Phasen U, V und W der elektrischen Maschine 1 nicht über eine Induktivität, sondern direkt mit den Wechselrichterzweigen 21-1 bzw. 21-2 bzw. 21-3 verbunden sind. Dafür ist zwischen den Wechselrichter 20 und den Zwischenkreis 10 eine zusätzliche Induktivität 30 geschaltet, welche die Funktion der Induktivitäten 22 gemäß Figur 2 übernimmt. Die grundsätzliche Funktionsweise der dritten Ausführungsform unterscheidet sich jedoch nicht von der der zweiten Ausführungsform.

## Patentansprüche

1. System zur Ankopplung mindestens einer Gleichstromquelle (9) an einen steuerbaren Energiespeicher (2), mit:
- dem steuerbaren Energiespeicher (2), welcher der Steuerung und der elektrischen Energieversorgung einer n-phasigen elektrischen Maschine (1), mit n ≥ 1, dient, wobei der steuerbare Energiespeicher (2) n parallele Energieversorgungszweige (3-1, 3-2, 3-3) aufweist, welche
▪ einerseits mit einer Bezugsschiene (T-) verbunden sind und
▪ andererseits mit jeweils einer Phase (U, V, W) der elektrischen Maschine (1) verbunden sind, und
- einem Zwischenkreis (10), welcher ausgangsseitig über eine steuerbare Koppelschaltung (12) mit den Energieversorgungszweigen (3-1, 3-2, 3-3) des steuerbaren Energiespeichers (2) und eingangsseitig mit der mindestens einen Gleichstromquelle (9) verbunden ist.

2. System nach Anspruch 1, wobei der Zwischenkreis (10) mit der Bezugsschiene (T-) verbunden ist und die steuerbare Koppelschaltung (12) für jeden Energieversorgungszweig (3-1, 3-2, 3-3) jeweils einen stromgeregelten Gleichspannungswandler (17-1; 17-2; 17-3) umfasst.

3. System nach Anspruch 1, wobei die steuerbare Koppelschaltung (12) einen n-phasigen Wechselrichter (20) umfasst, wobei jeweils ein Wechselrichterzweig (21-1; 21-2; 21-3) über jeweils mindestens eine zusätzliche Induktivität (22-1; 22-2; 22-3) mit jeweils einem Energieversorgungszweig (3-1; 3-2; 3-3) des steuerbaren Energiespeichers (2) verbunden ist.

4. System nach Anspruch 1, wobei die steuerbare Koppelschaltung (12) einen n-phasigen Wechselrichter (20) umfasst und über mindestens eine zusätzliche Induktivität (30) mit dem Zwischenkreis (10) verbunden ist.

5. System nach einem der vorhergehenden Ansprüche, wobei die Gleichstromquelle (9) einen Reichweitenverlängerer (13) mit einem durch einen Verbrennungsmotor (14) angetrieben Generator (15) umfasst.

6. System nach einem der Ansprüche 1 bis 4, wobei die Gleichstromquelle (9) mindestens eine Brennstoffzelle und/oder mindestens ein Photovoltaikmodul umfasst.

7. System nach einem der vorhergehenden Ansprüche, wobei die Energieversorgungszweige (3-1, 3-2, 3-3) des steuerbaren Energiespeichers (2) jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen, welche in Abhängigkeit von Steuersignalen die jeweils zugeordneten Energiespeicherzellen (5) überbrückt oder die jeweils zugeordneten Energiespeicherzellen (5) in den jeweiligen Energieversorgungszweig (3-1, 3-2; 3-3) schaltet.

8. Verfahren zum Betrieb eines Systems gemäß einem der Ansprüche 1 bis 7, wobei ein Stromfluss aus der mindestens einen Gleichstromquelle (9) in die Energieversorgungszweige (3-1, 3-2; 3-3) des steuerbaren Energiespeichers (2) oder die Phasen (U, V, W) der elektrischen Maschine (1) mit Hilfe der steuerbaren Koppelschaltung (12) gesteuert wird.

## Claims

1. System for coupling at least one DC source (9) to a controllable energy store (2) having:
- the controllable energy store (2), which is used to control and to supply electrical power to an n-phase electric machine (1), where n ≥ 1, wherein the controllable energy store (2) has n parallel power supply branches (3-1, 3-2, 3-3), which
• firstly are connected to a reference rail (T-) and
• secondly are connected to in each case one phase (U, V, W) of the electric machine (1), and
- an intermediate circuit (10), the output side of which is connected via a controllable coupling circuit (12) to the power supply branches (3-1, 3-2, 3-3) of the controllable energy store (2), and the input side of which is connected to the at least one DC source (9).

2. System according to Claim 1, wherein the intermediate circuit (10) is connected to the reference rail (T-), and the controllable coupling circuit (12) comprises a respective current-regulated DC-DC voltage converter (17-1; 17-2; 17-3) for each power supply branch (3-1, 3-2, 3-3) .

3. System according to Claim 1, wherein the controllable coupling circuit (12) comprises an n-phase inverter (20), wherein each inverter branch (21-1; 21-2; 21-3) is connected via at least one additional inductor (22-1; 22-2; 22-3) to a respective power supply branch (3-1; 3-2; 3-3) of the controllable energy store (2).

4. System according to Claim 1, wherein the controllable coupling circuit (12) comprises an n-phase inverter (20) and is connected via at least one additional inductor (30) to the intermediate circuit (10).

5. System according to one of the preceding claims, wherein the DC source (9) comprises a range extender (13) with a generator (15) driven by an internal combustion engine (14).

6. System according to one of Claims 1 to 4, wherein the DC source (9) comprises at least one fuel cell and/or at least one photovoltaic module.

7. System according to one of the preceding claims, wherein the power supply branches (3-1, 3-2, 3-3) of the controllable energy store (2) each have at least two energy storage modules (4) connected in series, each of which comprises at least one electrical energy storage cell (5) with an associated controllable coupling unit (6) which, in response to control signals, bypasses the respective associated energy storage cells (5) or connects the respective associated energy storage cells (5) into the respective power supply branch (3-1, 3-2; 3-3).

8. Method for operating a system according to one of Claims 1 to 7, wherein a flow of current from the at least one DC source (9) is directed into the power supply branches (3-1, 3-2; 3-3) of the controllable energy store (2) or into the phases (U, V, W) of the electric machine (1) with the aid of the controllable coupling circuit (12).

## Revendications

1. Système pour connecter au moins une source de courant continu (9) à un accumulateur d'énergie commandable (2), avec :
- l'accumulateur d'énergie commandable (2), lequel sert à la commande et à l'alimentation en énergie électrique d'une machine électrique à n phases (1), où n ≥ 1, dans lequel l'accumulateur d'énergie commandable (2) présente branches parallèles d'alimentation en énergie (3-1, 3-2, 3-3), lesquelles
▪ sont reliées d'un côté à une barre de référence (T-) et
▪ sont reliées de l'autre côté à une phase (U, V, W) respective de la machine électrique (1), et
- un circuit intermédiaire (10), lequel est relié du côté de sortie, via un circuit de connexion commandable (12), aux branches d'alimentation en énergie (3-1, 3-2, 3-3) de l'accumulateur d'énergie commandable (2) et du côté d'entrée, à l'au moins une source de courant continu (9).

2. Système selon la revendication 1, dans lequel le circuit intermédiaire (10) est relié à la barre de référence (T-) et le circuit de connexion commandable (12) comprend, pour chaque branche d'alimentation en énergie (3-1, 3-2, 3-3), respectivement un convertisseur continu-continu (17-1 ; 17-2 ; 17-3) à régulation de courant.

3. Système selon la revendication 1, dans lequel le circuit de connexion commandable (12) comprend un onduleur (20) à n phases, dans lequel respectivement une branche d'onduleur (21-1 ; 21-2 ; 21-3) est reliée via au moins une inductance (22-1 ; 22-2 ; 22-3) supplémentaire respective à une branche d'alimentation en énergie (3-1 ; 3-2 ; 3-3) respective de l'accumulateur d'énergie commandable (2).

4. Système selon la revendication 1, dans lequel le circuit de connexion commandable (12) comprend un onduleur à n phases (20) et est relié, via au moins une inductance (30) supplémentaire, au circuit intermédiaire (10).

5. Système selon l'une des revendications précédentes, dans lequel la source de courant continu (9) comprend un prolongateur d'autonomie (13) avec un générateur (15) entraîné par un moteur à combustion interne (14).

6. Système selon l'une des revendications 1 à 4, dans lequel la source de courant continu (9) comprend au moins une pile à combustible et/ou au moins un module photovoltaïque.

7. Système selon l'une des revendications précédentes, dans lequel les branches d'alimentation en énergie (3-1, 3-2 , 3-3) de l'accumulateur d'énergie commandable (2) présentent respectivement au moins deux modules d'accumulation d'énergie (4) couplés en série qui comprennent respectivement au moins une pile électrique d'accumulation d'énergie (5) avec une unité de connexion (6) commandable associée, laquelle, en fonction de signaux de commande, court-circuite les piles d'accumulation d'énergie (5) respectivement associées, ou met les piles d'accumulation d'énergie (5) respectivement associées en circuit avec la branche d'alimentation en énergie (3-1, 3-2 ; 3-3) respective.

8. Procédé pour faire fonctionner un système selon l'une des revendications 1 à 7, dans lequel un flux de courant issu de l'au moins une source de courant continu (9) est guidé dans les branches d'alimentation en énergie (3-1 , 3-2 ; 3-3) de l'accumulateur d'énergie commandable (2) ou les phases (U, V, W) de la machine électrique (1) à l'aide du circuit de connexion commandable (12).
